# EUROPÄISCHE PATENTANMELDUNG

(11) **EP 3 045 252 A1**
(43) Veröffentlichungstag der Anmeldung: **20.07.2016**
(21) Anmeldenummer: 15198181.8
(22) Anmeldetag: 07.12.2015
(51) Int. Cl.: B23K 1/002, B23K 1/00, B23K 3/047, B23K 3/08, B23K 37/06, H01R 4/02, H01R 43/02, B23K 101/36

(54) **INDUKTIVES LÖTVERFAHREN UND VORRICHTUNG**

(30) Priorität: 16.01.2015 CH 542015
(71) Anmelder: Elmotec AG, 5314 Kleindöttingen (CH)
(72) Erfinder: Müller, Albin, 5324 Full-Reuenthal (CH)
(74) Vertreter: Tompkin, Christine

(57) **Zusammenfassung**

Ein Verfahren umfasst das induktive Erhitzen einer Verbindungsstelle zwischen einem ersten elektrischen Werkteil (5) und einem zweiten elektrischen Werkteil (6) mittels einem Hochfrequenzgenerator (2) und einer Induktionsspule (4), das Heranführen eines Lots (8) an die Verbindungsstelle zwischen den beiden elektrischen Werkteilen (5, 6) und das Schmelzen des Lots (8) an der Verbindungsstelle. Erfindungsgemäss wird ein Heissluftstrom (9') auf das geschmolzene Lot (8a) mittels eines Heissluftgebläses (9) in einer Richtung entgegen der Fliessrichtung des Lots (8a) gerichtet. Dies verhindert, dass das Lot (8a) über den Rand der Lötstelle hinwegfliesst. Die Erfindung wird insbesondere auf das Löten eines Autobatteriekabels und einem Kabelschuh (6) mit elektrischem Anschlusselement (7) angewendet. Es wird auch eine Vorrichtung (1) zur Durchführung des Verfahrens beansprucht.

## Beschreibung

### Technisches Gebiet

Die Erfindung betrifft ein Verfahren und eine Vorrichtung zum induktiven Löten, insbesondere ein automatisierbares induktives Verfahren zum Löten von Anschlüssen einer Autobatterie.

### Stand der Technik

Induktive Lötverfahren sind allgemein bekannt. Es wird häufig auch zum automatisierten Löten von Werkteilen verwendet, da durch geeignete Formgebung des Induktors die Lötstelle gezielt erhitzt werden kann. Es wird dabei auch die Temperatur an der zu lötenden Stelle gemessen und entsprechend die Induktionsspule gesteuert betrieben.

Zusätzlich zur Erwärmung der Lötstelle durch induktive Erwärmung wird auch in bekannten Verfahren ein Luft- oder Gasstrom eingesetzt, um die Lötstelle nach Beendigung des Lötens rasch zu kühlen.

In einem bekannten Lötverfahren gemäss EP 215 122 wird ein Luftstrom zusammen mit einer Saugvorrichtung eingesetzt, um Schlick vom geschmolzenen Lot weg zu blasen und durch die Saugvorrichtung zu entfernen.

In EP 364 422 ist ein Lötverfahren offenbart, bei dem in einem geschlossenen und von der Umgebungsluft getrennten Raum um die Lötstelle herum ein laminarer Gasstrom eingeführt wird, um Rauch und andere Partikel vom Ende eines Glasfaserelements fernzuhalten, das der Temperaturmessung mittels Infrarotstrahlung dient.

### Beschreibung der Erfindung

Der vorliegenden Erfindung ist die Aufgabe gestellt, ein Lötverfahren und eine Vorrichtung zum Verlöten von elektrischen Kabeln mit elektrischen Anschlusselementen bereitzustellen, bei dem das Lot möglichst auf der offenen Lötstelle konzentriert verbleibt und verhindert wird, dass das Lot während des Lötens über die Verbindungsstelle hinweg und an der Kabelisolation entlang hinabfliesst.

Diese Aufgabe wird erfindungsgemäss durch ein Lötverfahren gemäss Anspruch 1 gelöst.

Das Verfahren umfasst das induktive Erhitzen einer Verbindungsstelle zwischen einem ersten elektrischen Werkteil und einem zweiten elektrischen Werkteil mittels einem Hochfrequenzgenerator und einer Induktionsspule,
das Heranführen eines Lots an die Verbindungsstelle zwischen den beiden elektrischen Werkteilen,
das Schmelzen des Lots an der Verbindungsstelle,
und das Richten eines Heissluftstroms auf das geschmolzene Lot mittels eines Heissluftgebläses in einer Richtung entgegen der Fliessrichtung des Lots.

Durch eine Strömung heisser Luft auf die Lötstelle mittels eines Heissluftgebläses wird ein starker Luftstrom auf die Lötstelle gerichtet, der dort auf das fliessende Lot prallt und dieses vom Fliessen über den Rand der Lötstelle an den beiden elektrischen Werkteilen abhält. Es wird dabei ein Gegendruck entgegen der Fliessrichtung des Lots gerichtet, sodass der Luftstrom somit eine Art Luftwall oder aerodynamischen Damm bildet, wodurch das Lot daran gehindert wird, über die Lötstelle hinaus wegzufliessen. Stattdessen verbleibt das Lot auf der Lötstelle konzentriert und vermag dadurch vermehrt in die Hohlräume zwischen den beiden elektrischen Werkteilen zu fliessen. Die resultierende elektrische Verbindung ist dadurch verbessert. Zudem entsteht kein Fluss von Lot an unerwünschten Stellen ausserhalb der Lötstelle, die sonst beim Betrieb der elektrischen Werkteile zu Fehlfunktionen führen könnten.

In einer Ausführung der Erfindung wird der Luftstrom aus einer Richtung leicht unter der Kante der Lötstelle auf diese gerichtet, sodass ein Druck entgegen der Fliessrichtung und der Schwerkraft entsteht.

Je nach Form der zu lötenden Werkteile kann es auch zweckmässig sein, den Luftstrom seitlich auf die Lötstelle zu richten.

In einer Ausführung der Erfindung wird das Verfahren auf ein elektrisches Kabel als erstes elektrisches Werkteil und ein Kabelschuh mit elektrischem Anschlusselement als zweites elekrisches Werkteil angewendet. Dazu wird der Kabelschuh um die Drähte am Kabelende gepresst, der die Drahtenden umschliesst und einen Rand auf Höhe der Drahtenden bildet. Die beiden Werkteile werden in die Induktionsspule angeordnet, sodass diese den Kabelschuh und die Drahtenden umschliesst. Das Lot wird sodann zu den Drahtenden geführt, wo es geschmolzen wird. Während des Schmelzens des Lots an den Drahtenden fliesst das Lot in die Zwischenräume zwischen den einzelnen Drähten und an den Rand des Kabelschuhs und an das mit dem Kabelschuh verbundenen elektrischen Anschlusselements. Der Heissluftstrom bewirkt, dass das Lot nicht über den Rand des Kabelschuhs und an der Kabelisolation entlang fliesst. Hierzu wird der Heissluftstrom aus einer Richtung unter dem Rand des Kabelschuhs auf die Lötstelle gerichtet.

In einer Ausführung wird zudem während des Lötvorgangs die folgenden zusätzlichen Verfahrensschritte ausgeführt:
die Messung der Temperatur im Bereich der Lötstelle mittels einem Temperaturmessgeräts,
die Leitung von mindestens einem Temperaturmesswert an eine Steuereinheit des Hochfrequenzgenerators für die Induktionsspule,
und die Steuerung des Hochfrequenzgenerators entsprechend dem zugeführten Temperaturmesswert.

Hierdurch kann die Steuereinheit der Hochfrequenz-Induktionsspule entsprechend der gemessenen Temperaturwerte angepasst werden, um die Temperatur an der Lötstelle aufgrund vorgegebener Werte durch senken oder erhöhen der Leistung des Generators zu optimieren. Die Temperaturmessung wird beispielsweise mittels eines Pyrometers oder Infrarotmessgeräts ausgeführt.

Die Temperatur des Luftstroms aus dem Heissluftgebläse liegt über der Umgebungstemperatur, sodass beim Anströmen des Lots keine Kühlung hervorgerufen wird und der Lötvorgang nicht beeinträchtigt wird. Geeignete Temperaturen des Heissluftstroms sind zum Beispiel 30 bis 250°C. Dabei wird die Temperatur des Luftstroms so gewählt, dass ein Fliessen des Lots zwischen den einzelnen elektrischen Werkteilen gewährleistet ist und keine Beschleunigung des Lotvorgangs durch frühzeitige Abkühlung des Lots bewirkt wird.

Die Erfindung hat den Vorteil, dass der Fluss des geschmolzenen Lots während des Lötvorgangs gezielt eingedämmt und an Ort gehalten werden kann und an einem Wegfliessen gehindert werden kann. Die Qualität der Lötverbindung ist dadurch verbessert und kontrolliert wiederholbar.

Das erfindungsgemässe Lötverfahren eignet sich für das Löten mittels eines beliebigen Weichlots, wie zum Beispiel Zinn-Kupfer-Lot, Silberhaltige Lote und andere Weichlote.

In einer Ausführung der Erfindung wird ein Batteriekabel mit einem Kabelschuh mittels des erfindungsgemässen Verfahrens verlötet.

Gemäss der Erfindung wird eine Vorrichtung zum Löten von Werkteilen offenbart aufweisend:
Einen Hochfrequenz-Induktionsgenerator und eine mit dem Hochfrequenz-Induktionsgenerator verbundene Induktionsspule,
eine Vorrichtung zum Halten eines ersten Werkteils und eines zweiten Werkteils, wobei die Induktionsspule um eine vorgesehene Lötstelle zwischen dem ersten und zweiten Werkteil angeordnet ist,
eine Vorrichtung zum Heranführen eines Weichlots auf die vorgesehene Lötstelle, und ein Heissluftgebläse mit einer Düse, die auf die Lötstelle entgegen einer Fliessrichtung des Lots von der Lötstelle weg gerichtet ist.

In einer Ausführung weist die erfindungsgemässe Vorrichtung zudem ein Temperaturmessgerät auf, das mit dem Hochfrequenz-Induktionsgenerator verbunden ist.

Weitere Vorteile der Erfindung folgen aus den abhängigen Patentansprüchen und aus der nachfolgenden Beschreibung, in welcher die Erfindung anhand eines in den schematischen Zeichnungen dargestellten Ausführungsbeispieles näher erläutert wird. Es zeigt:
Kurze Beschreibung der Figuren
Fig. 1 zeigt eine schematische Darstellung einer Gesamtansicht einer Vorrichtung zum Durchführen des erfindungsgemässen induktiven Lötverfahrens mit Heissluftgebläse.
Fig. 2 zeigt eine nähere Ansicht der Lötstelle der Vorrichtung mit Heissluftgebläse aus Figur 1.
Fig. 3 zeigt eine Draufsicht der Lötstelle gemäss III aus Figur 2.
Fig. 4 zeigt eine Seitenansicht einer Lötstelle gemäss dem Stand der Technik, bei der kein Heissluftgebläse zum Einsatz kommt und bei dem das Lot über den Rand der Lötstelle fliesst.
Figur 5 zeigt eine Seitenansicht einer Lötstelle gemäss der Erfindung und gemäss V aus Figur 2 und 3, bei der das Heissluftgebläse zum Einsatz kommt und das Lot über den Rand der Lötstelle verbleibt.

In den Figuren sind für dieselben Elemente jeweils dieselben Bezugszeichen verwendet worden und erstmalige Erklärungen betreffen alle Figuren, wenn nicht ausdrücklich anders erwähnt.

### Ausführungsbeispiele der Erfindung

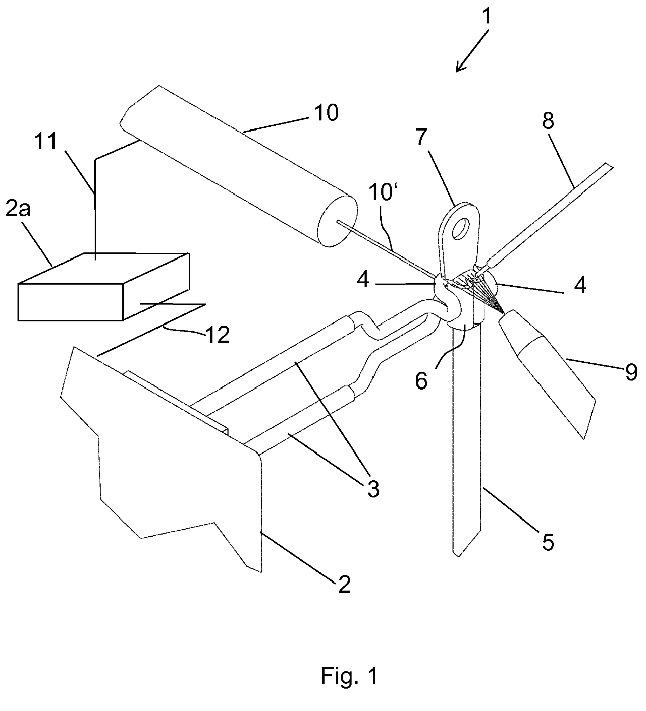

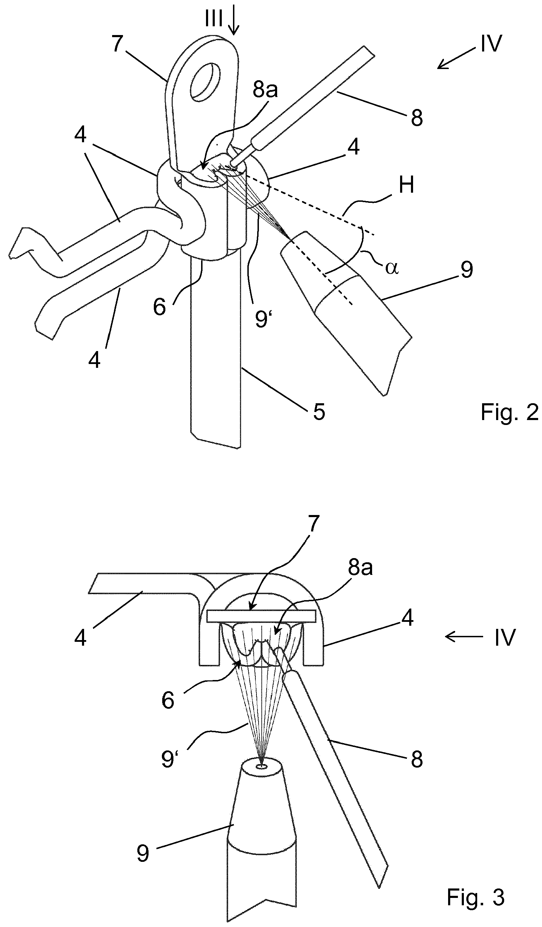

Das Verfahren wird anhand einer Vorrichtung zum Löten von zwei elektrischen Werkteilen wie in Figur 1, 2, 3 und 5 dargestellt beschrieben. Dort ist ein Gerät 1 zum induktiven Löten von zwei elektrischen Werkteilen gezeigt mit einem Hochfrequenzgenerator 2, mit dem elektrische Leiter 3 mit einer Induktionsspule 4 verbunden sind. Die Spule 4 ist so geformt, dass sie zwei Werkteile 5 und 6 umschliesst. Das Werkteil 5 ist in dem gezeigten Beispiel ein Kabel, beispielweise ein Autobatteriekabel, an dessen Drahtenden ein Kabelschuh 6 gepresst ist. An dem Kabelschuh 6 ist ein elektrisches Anschlusselement 7 angeordnet. Beim erfindungsgemässen Lötverfahren wird der Hochfrequenzgenerator 2 mittels einer Steuereinheit 2a in Betrieb gesetzt, wodurch die beiden elektrischen Werkteile 5 und 6, der Kabelschuh und die Drahtenden des Kabels, mittels der Induktionsspule sowie ein herangeführtes Lot 8 erhitzt werden. Je nach Werkteil kann hierfür ein geeignetes Weichlot mit einem Schmelzpunkt von beispielsweise 260 oder 280°C oder bis 350°C verwendet werden. Während das Lot schmilzt bildet sich auf den Drahtenden des Kabels 5 geschmolzenes Lot 8a, das den Bereich innerhalb des Randes 6a des Kabelschuhs 6 füllt und in den Zwischenräumen zwischen den einzelnen Drähten des Kabels sowie zwischen den Drähten und dem Kabelschuh 6 hinabfliesst. Während des Schmelzens wird ein Heissluftgebläse 9 in Betrieb gesetzt und dessen starker, heisser Luftstrom 9' auf das geschmolzene Lot 8a gerichtet. Das Gebläse 9 wird dabei so ausgerichtet, dass das Lot innerhalb des Randes 6a verbleibt und nicht über den Rand und an der Isolation des Kabels 5 hinabfliesst. Hierzu wird das Gebläse 9 in einem Winkel unter der Horizontalen H ausgerichtet, sodass der Luftstrom von unten her auf das geschmolzene Lot strömt. Der Luftstrom prallt auf das Lot und bildet dort einen Luftwall, der einen Gegendruck zum Fluss des Lots bewirkt. In den Figuren 2, 3 und 5 ist die Richtung des Gebläses 9 bezüglich der Horizontalen H sowie der Winkel α unter der Horizontalen zwischen der Horizontalen H und der Längsachse bzw. der Achse des Luftstroms dargestellt. Der Winkel α beträgt beispielsweise zwischen 0 und 85°, in weiteren Beispielen zwischen 50 und 80° oder zwischen 20° und 40°.

Die Temperatur des Heissluftstroms ist beispielsweise zwischen 50 und 100°C. Diese Temperatur ist ausreichend hoch, um ein vorzeitiges Auskühlen des Lots zu vermeiden und dabei die zur Bewirkung einer genügenden Verbindung der elektrischen Kontaktflächen zu gewährleisten. Eine höhere Temperatur wäre auch anwendbar.

Das Gebläse 9 ist dafür eingerichtet, einen starken Luftstrom und einen Gegendruck auf das fliessende Lot zu erzeugen. Dabei wird das Gebläse in seiner Stärke so eingesetzt, dass das fliessende Lot 8a vom Hinabfliessen abgehalten wird, es aber nicht von der Lötstelle weggeblasen wird. Der verwendete Luftstrom unterscheidet sich als solches von einem schwachen Luftstrom zum lediglichen Kühlen einer Oberfläche oder einem laminaren Luftstrom, wie zum Beispiel für das Zuführen eines Gases.

Das Gebläse für das erfindungsgemässe Verfahren weist hierzu beispielsweise eine schmale runde Düse auf, die einen gezielten Luftstrom von kleiner Querschnittfläche erzeugt. In einer weiteren Ausführung der Erfindung weist es beispielsweise eine Düse mit länglicher Öffnung auf, die gerade oder auch gerundet ausgeführt ist. Je nach Form und Grösse der Lötstelle, an der das Lot 8a konzentriert gehalten und von einem Wegfliessen abgehalten werden soll, kann die Düse entsprechend geformt werden. Je nach Form der Düse kann auch die Stärke des Gebläses angepasst werden.

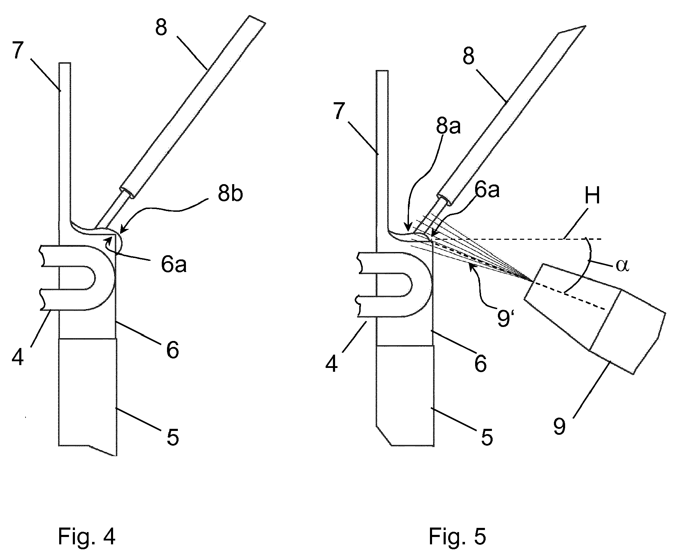

In Figur 4 und 5 ist in einer Seitenansicht die Wirkung des Heissluftstroms 9' auf das fliessende Lot 8a dargestellt. Figur 4 zeigt wie in einem herkömmlichen Lötverfahren das Lot 8b über den Rand des Kabelschuhs 6a hinweg- und entlang dem Kabel 5 hinunterfliesst. Figur 5 zeigt wie das Lot 8a aufgrund der Wirkung des Heissluftstroms 9' im Bereich des Kabelschuhs 6a bleibt.

Wie in Figur 1 gezeigt umfasst das Verfahren beispielsweise auch den Einsatz eines Temperaturmessgeräts wie zum Beispiel ein Pyrometer 10, der Infrarotstrahlung 10' von der Induktionsspule 4 detektiert und ein Temperaturmesssignal erzeugt. Dieses Signal wird über eine Leitung 11 an die Steuereinheit 2a geleitet, wo es zur Steuerung des Hochfrequenzgenerators 2 eingesetzt wird.

### Bezugszeichenliste

- 1: Lötvorrichtung
- 2: Hochfrequenzgenerator
- 2a: Steuereinheit für Hochfrequenzgenerator
- 3: elektrische Leiter
- 4: Induktionsspule
- 5: Kabel
- 6: Anschlusselement, Kabelschuh
- 7: elektrisches Kontaktelement
- 8: Lot
- 8a: geschmolzenes Lot
- 9: Heissluftgerät
- 9': Heissluftströmung
- 10: Pyrometer
- 10': Infrarotstrahl
- 11: elektrische Leitung für Sensorsignalübertragung
- 12: elektrische Leitung
- H: Horizontale auf Höhe der Lötstelle
- α: Winkel zwischen Horizontalen und Achse des Gebläses

## Patentansprüche

1. Verfahren umfassend das induktive Erhitzen einer Verbindungsstelle zwischen einem ersten elektrischen Werkteil (5) und einem zweiten elektrischen Werkteil (6) mittels einem Hochfrequenzgenerator (2) und einer Induktionsspule (4),
das Heranführen eines Lots (8) an die Verbindungsstelle zwischen den beiden elektrischen Werkteilen (5, 6),
das Schmelzen des Lots (8) an der Verbindungsstelle,
**gekennzeichnet durch**
das Richten eines Heissluftstroms (9') auf das geschmolzene Lot (8a) mittels eines Heissluftgebläses (9) in einer Richtung entgegen der Fliessrichtung des Lots (8a).

2. Verfahren nach Anspruch 1,
**dadurch gekennzeichnet, dass**
der Heissluftstrom (9') von einem Punkt aus unter der Verbindungsstelle zwischen dem ersten und zweiten elektrischen Werkteil (5, 6) auf das geschmolzene Lot (8a) gerichtet wird.

3. Verfahren nach Anspruch 1,
**dadurch gekennzeichnet, dass**
der Heissluftstrom (9') in einem Winkel (α) von 0-85° unter der Horizontalen (H) auf das geschmolzene Lot (8a) gerichtet wird.

4. Verfahren nach Anspruch 3,
**dadurch gekennzeichnet, dass**
der Heissluftstrom (9') in einem Winkel (α) von 50-80° unter der Horizontalen (H) auf das geschmolzene Lot (8a) gerichtet wird.

5. Verfahren nach einem der vorangehenden Ansprüche 1 bis 4,
**dadurch gekennzeichnet, dass**
die Temperatur an der Induktionsspule (4) mittels eines Temperaturmessgeräts (10) gemessen wird, mindestens ein Temperaturmesswert an eine Steuereinheit (2a) des Hochfrequenzgenerators (2) geleitet wird und der Hochfrequenzgenerator (2) entsprechend dem Temperaturmesswert gesteuert wird.

6. Verfahren nach einem der vorangehenden Ansprüche 1 bis 5,
**dadurch gekennzeichnet, dass**
das Verfahren zum Löten eines elektrischen Kabels (5) als erstes elektrisches Werkteil und eines Kabelschuhs (6) mit elektrischem Anschlusselement (7) als zweites elektrisches Werkteil angewendet wird.

7. Verfahren nach Anspruch 6,
**dadurch gekennzeichnet, dass**
das Verfahren zum Löten eines Autobatteriekabels (5) als erstes elektrisches Werkteil und eines Kabelschuhs (6) mit Anschlusselement (7) für Autobatterien als zweites elektrisches Werkteil angewendet wird.

8. Verfahren nach einem der vorangehenden Ansprüche 1 bis 7,
**dadurch gekennzeichnet, dass**
der Heissluftstrom (9') des Heissluftgebläses (9) eine Temperatur zwischen 30°C und 250°C aufweist.

9. Vorrichtung (1) zur Durchführung des Verfahrens nach einem der Ansprüche 1-8
aufweisend
einen Hochfrequenz-Induktionsgenerator (2) und eine mit dem Hochfrequenz-Induktionsgenerator (2) verbundene Induktionsspule (4),
eine Vorrichtung zum Halten eines ersten Werkteils (5) und zweiten Werkteils (6), wobei die Induktionsspule (4) um eine vorgesehene Verbindungsstelle zwischen dem ersten und zweiten Werkteil (5, 6) angeordnet ist,
eine Vorrichtung zum Heranführen eines Weichlots (8) auf die vorgesehene Verbindungsstelle,
und ein Heissluftgebläse (9) mit einer Düse, die auf die Verbindungsstelle entgegen einer Fliessrichtung des Lots (8a) von der Verbindungsstelle weg gerichtet ist.

10. Vorrichtung nach Anspruch 9
**dadurch gekennzeichnet, dass**
das Heissluftgebläse (9) in einem Winkel (α) zwischen 0 bis 85° unter der Horizontalen (H) auf die Verbindungsstelle zwischen den beiden Werkteilen (5, 6) gerichtet ist.

11. Vorrichtung nach Anspruch 10
**dadurch gekennzeichnet, dass**
das Heissluftgebläse (9) in einem Winkel (α) zwischen 50 bis 80° unter der Horizontalen (H) auf die Verbindungsstelle zwischen den beiden Werkteilen (5, 6) gerichtet ist.
